(19) **Europäisches Patentamt / European Patent Office / Office européen des brevets**

(11) **EP 4 686 865 A1**

(12) **EUROPEAN PATENT APPLICATION**

(43) Date of publication:
04.02.2026 Bulletin 2026/06

(21) Application number: 25193233.1

(22) Date of filing: 31.07.2025

(51) International Patent Classification (IPC):
*F16L 33/22* (2006.01)

(52) Cooperative Patent Classification (CPC):
F16L 33/221

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 01.08.2024 IT 202400018019

(71) Applicant: Flexin Group S.r.l.
40037 Sasso Marconi (Bologna) (IT)

(72) Inventor: GIOVANNINI, MIRCO
40069 ZOLA PREDOSA (BOLOGNA) (IT)

(74) Representative: Milli, Simone
Bugnion S.p.A.
Via di Corticella, 87
40128 Bologna (IT)

(54) **CONNECTOR FOR FLEXIBLE HOSES AND METHOD FOR REALIZING A CONNECTION TO AT LEAST A FLEXIBLE HOSE BY USING THE CONNECTOR**

(57) Connector (1) for flexible hoses, comprising a hollow main body (15), extending in a first axial direction (X) and defining an element for coupling with a flexible hose (101). The hollow main body (15) comprises an outer lateral surface having at least one annular ramp-like element (5a), adjacent to at least a circumferential annular cavity (6a) and defining a housing for a sealing element (12a). The connector (1) comprises also at least one clamping element (45) extending in the first axial direction (X) and configured for applying, radially, a locking force on an outer surface of the flexible hose (101) when the flexible hose (101) is coupled with the hollow main body (15). The connector (1) comprises a connecting body (2) extending around the hollow main body (15) and to which at least a clamping element (45) is fixed. At least one portion (45a) of the clamping element (45) comprises a curved surface (46a), in radial direction.

Fig.1

EP 4 686 865 A1

**Description**

The present invention relates to a connector and a method for realizing a connection to at least a flexible hose by using the connector object of the present invention.

In particular, the present invention relates to the field of thermal conditioning and treatment plants both for mobile and stationary systems.

It is known that the connectors of thermal conditioning and treatment plants are essential elements for guaranteeing the correct functioning of the fluid distribution system.

However, such connectors can have criticalities, which, if not properly managed, can lead to significant problems. In fact, a wrong mounting of a connector can cause fluid leaks, above all if fluid pressure inside the hose is high.

Moreover, the fluids used in the refrigeration and conditioning field are characterized by reduced molecular dimensions; such feature makes it particularly complex to avoid that such fluids permeate the walls of the flexible hoses and the region of the coupling between flexible hose and connector.

In order to reduce fluids permeation across the walls of the hoses, producers have developed different connector architectures.

The connectors of the state of the art have a hollow main body, on which the flexible hose is introduced.

A sealing element is applied, in a specific seat, to the hollow main body. At least a clamping element is also fixed to the hollow main body, to achieve an optimal sealing between hose and connector.

The clamping elements allow the application of a force to the sealing element, thus guaranteeing the correct pressure conditions between the sealing element and the inner wall of the hose.

According to the state of the art, clips are applied to the clamping elements, to guarantee the sealing between connector and hose.

The profile according to the state of the art of the clamping elements does not guarantee an appropriate sealing when the pressures in the plant increase considerably.

In particular, due to their configuration, the clamping elements used in the known art do not allow a good sealing when liquid pressures in the plant are high.

So, the clamping elements according to the state of the art are not suitable for some kinds of fluids, in particular those working at high pressures, i.e. carbon dioxide, or inflammable gases, i.e. propane.

Aim of the present invention is to provide a connector for flexible hoses, which is able to overcome the limits of the known art, and which in particular guarantees the sealing, even when using fluids requiring higher working pressures.

Aim of the present invention is also to provide a method allowing to realize a connection with at least a flexible hose, by using the connector object of the present invention, to guarantee a better sealing.

In this context, the technical object and the specified aims at the basis of the present invention are to provide a connector and a method for realizing a connection with at least a flexible hose, comprising the technical features described in one or more of the appended claims.

Further features and advantages of the present invention will be clearer from the illustrative, and so not limiting, description of a preferred, but not exclusive, embodiment, of a connector and a method for realizing a connection with at least a flexible hose, by using the above-mentioned connector.

Such description will be provided in the following with reference to the appended, purely illustrative, and not limiting, drawings, in which:

- Figure 1 shows a schematic representation of an embodiment of the connector, object of the present invention;
- figure 2 shows a schematic representation of a particular of the connector of figure 1 and object of the present invention;
- figure 3 shows a schematic representation of a particular of the connector of figure 1 and object of the present invention;
- figure 4 shows a schematic representation of a coupling between the connector, object of the present invention, and a flexible hose.

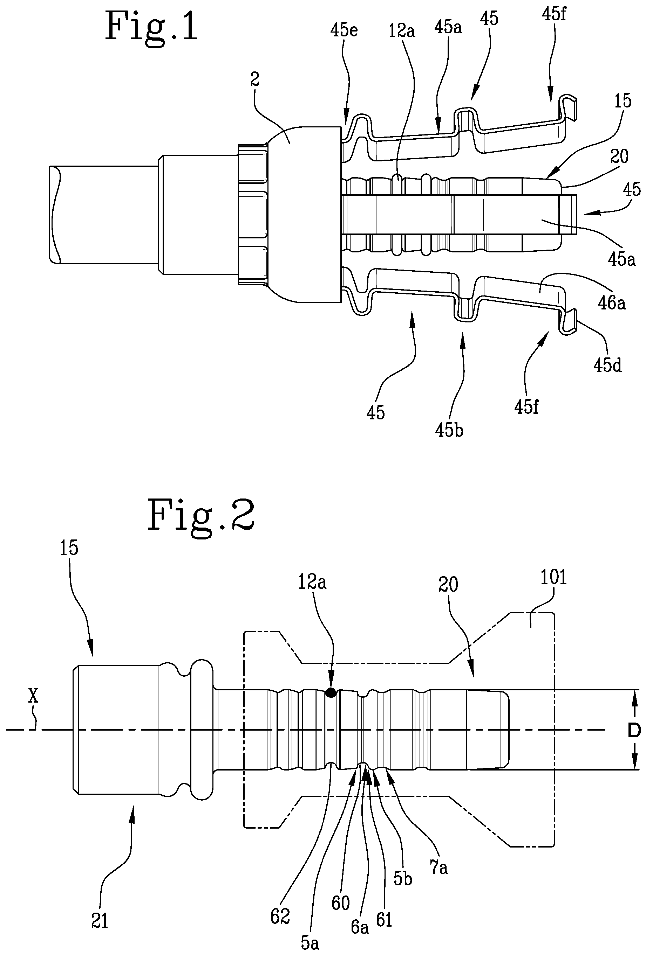

In particular, the connector shown in figure 1 and indicated with the numerical reference 1 comprises a hollow main body 15 defining a coupling element for a flexible hose 101.

The hollow main body 15 extends in a first axial direction "X".

The hollow main body 15 can have a distal portion 20 having tapered configuration.

The distal portion 20 is configured to favour the sealing-coupling between the hollow main body 15 and the flexible hose 101.

The hollow main body 15 has a proximal portion 21, opposite to the distal portion 20.

The hollow main body 15 comprises an outer lateral surface provided with at least a ramp-like annular element 5a.

In other words, the outer lateral surface extends between the proximal portion 21 and the distal portion 20 along the first axial direction "X".

The ramp-like annular element 5a is adjacent to at least a circumferential annular cavity 6a and defines a housing for a sealing element 12a.

When the flexible hose 101 is introduced on the hollow main body 15, the outer lateral surface of the hollow main body 15 is arranged inside the flexible hose 101.

Such arrangement allows fluid communication between the flexible hose 101 and the inner cavity of the hollow main body 15.

The sealing element 12a, which is housed in the annular cavity 6a, allows, in use, a sealing-coupling between the flexible hose 101 and the hollow main body 15.

The sealing ring 12a defines a sealing element between the hollow main body 15 and the flexible hose 101 and prevents any accidental fluid leak. Preferably, the sealing element 12a has a circular radial section.

More preferably, such sealing element 12a is of the O-ring kind.

It is also to be observed that the sealing element 12a can have other geometries other than the one described, for example it can have a square or oval radial section.

According to an aspect of the present invention shown in figure 2, the positioning of the sealing element 12a is guaranteed by two ramp-like elements 5a and 5b having a containment and guide function of the sealing element 12a.

According to another aspect, the annular cavity 6a is delimited by a pair of side walls 60, 61 having a curved profile and a bottom wall 62.

The term "curved profile" indicates a curvilinear profile.

Such curved profile is different from the profiles of the annular cavities 6a for the sealing rings 12a of the known art, according to which the pair of side walls 60 and 61 is connected to a bottom wall 62 with sharp edges. Such configuration with curved profile of the annular cavity 6a allows a better sealing of the sealing element 12a when the flexible hose 101 is introduced, in coupling, in the hollow main body 15.

Each of the walls 60 and 61 is the wall of a ramp-like annular element 5a and 5b.

The side wall 60 is the wall of the ramp-like annular element 5a, while the side wall 61 is the wall of the ramp-like annular element 5b, respectively.

In other words, the side walls 60 and 61 of the annular cavity 6a have a concavity inversion along the first axial development direction "X" of the hollow main body 15.

According to another aspect shown in figure 2, the side walls 60 and 61 of the ramp-like annular elements 5a and 5b are directly connected to each other, to form the annular cavity 6a by means of a bottom wall 62. According to this aspect, the annular cavity 6a comprises a first side wall 60, a bottom wall 62 and a second side wall 61.

Preferably, the bottom wall 62 has a substantially rectilinear profile. According to an aspect, the ramp-like annular elements 5a and 5b are separated by a distance between the length of the annular cavity 6a plus 5 mm and the length of the annular cavity 6a minus 5 mm.

More preferably, the ramp-like annular elements 5a and 5b are separated by a distance between the length of the annular cavity 6a plus 2 mm and the length of the annular cavity 6a minus 2 mm.

According to another aspect, the ramp-like elements 5a and 5b are separated by a distance between the diameter of the sealing element 12a plus 5 mm and the diameter of the sealing element 12a minus 5 mm. More preferably, the ramp-like elements 5a and 5b are separated by a distance between the diameter of the sealing element 12a plus 2 mm and the diameter of the sealing element 12a minus 2 mm.

The arrangement of the ramp-like annular elements 5a and 5b makes the mounting easier by guiding the sealing element 12a inside the annular cavity 6a and guarantees that the sealing element 12a keeps its position during the mounting.

It is to be observed that the annular cavity 6a and the sealing ring 12a are dimensioned to each other so that the axial clearance, or rather, along the development direction of the first axial direction "X" of the sealing ring 12a inside the annular cavity 6a, is absent (or very limited).

Any undesired axial movement of the sealing ring 12a is avoided while using the present connector 1.

According to another aspect, the ramp-like annular element 5a is adjacent to at least an annular groove 7a.

The connector 1, object of the present invention, comprises also a connecting body 2.

The connecting body 2 is integral to the proximal portion 21 of the hollow main body 15.

The connecting body 2 has a substantially hemispherical configuration.

In particular, the connecting body 2 extends around the hollow main body 15.

It is also to be observed that at least a clamping element 45 is fixed to the connecting body 2.

The clamping element 45 extends in the first axial direction "X" and is configured to apply, radially, a locking force on an outer surface of the flexible hose 101, when the flexible hose 101 is coupled with the hollow main body 15.

So, the connector 1 comprises at least a clamping element 45 fixed to the connecting body 2.

As it is shown for example in figure 1, the connector 1 comprises three clamping elements 45 distributed along the circumference of the connecting body 2.

Preferably, the clamping elements 45 are equidistant from each other. The connector 1 can comprise a different number of clamping elements 45 according to the needs, i.e. as a function of a sealing to be kept on the flexible hose 101.

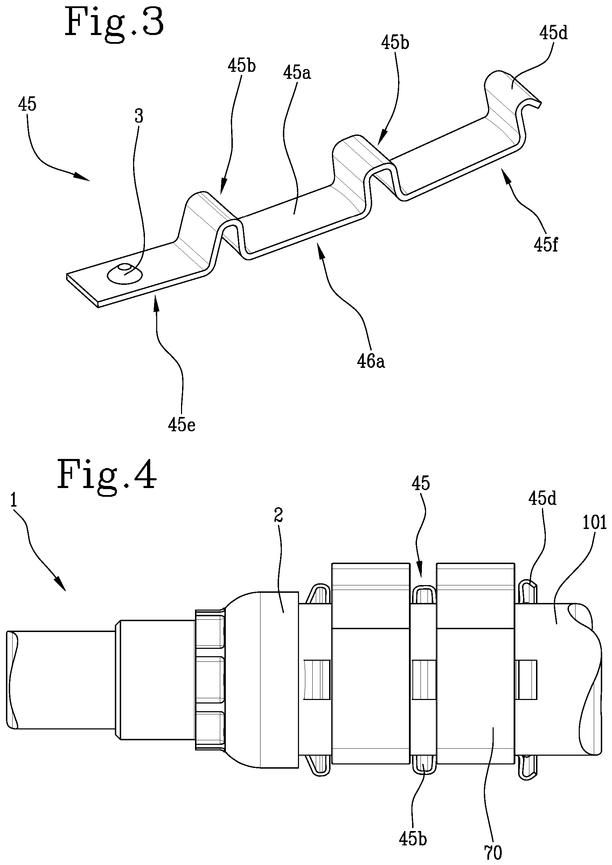

According to another aspect of the present invention shown in figure 3, the clamping element 45 is provided with at least a portion 45a.

The portion 45a of the clamping element 45 comprises a curved surface 46a in radial direction.

The curved surface 46a faces the hollow main body 15.

In other words, the curved surface 46a of the portion 45a of the clamping element 45 is the surface which, in use, is interested by the contact to the flexible hose 101.

The hollow main body 15 comprises a cylindrical portion with a diameter *D*.

Preferably, the curved surface 46a of the portion 45a of the clamping element 45 has a diameter between

$$\frac{D}{\pi^3}$$

the minimum value $\frac{D}{\pi^3}$ and the maximum value $D \cdot \pi^5$.

Preferably, the curved surface 46a has a diameter between 0.171 mm and 8247.228 mm.

More preferably, the curved surface 46a has a diameter between 0.181 mm and 7872.354 mm.

Each clamping element 45 has a profile having at least a recess 45b. According to another aspect, the clamping element 45 has in a proximal end 45e, relative to the connecting body 2, a connecting means 3.

In other words, each clamping means 45 is fixed to the connecting body 2 by means of the respective connecting means 3.

Moreover, the clamping element 45 has in a distal end 45f, relative to the connecting body 2, a protruding tab 45d.

The above-mentioned, particular configuration of the clamping element 45 allows to realize a connection with an efficient sealing between the hollow main body 15 and the flexible hose 101.

According to another aspect shown in figure 4, the connector 1 comprises also a clip 70 intended to wrap, in the portion 45a of the clamping element 45 and at the sealing element 12a, the flexible hose 101.

While in use, the clip 70 allows the application of a pressure outside (in substantially radial direction) to the flexible hose 101 at the sealing element 12a so to compress the flexible hose 101 on the hollow main body 15 of the connector 1, thus realizing the sealing.

According to an aspect of the present invention, in order that a particularly efficient sealing connection between the flexible hose 101 and the connector 1 is realized, it is provided the application of at least a clip 70 around the clamping elements 45.

In particular, the clip 70 wraps the clamping element 45 at the portion 45a and the sealing element 12a of the hollow main body 15.

Thanks to the curved surface 46a of the portion 45a of the clamping element 45 and to the sealing element 12a a particularly efficient sealing coupling is realized between flexible hose 101 and hollow main body 15. Advantageously, the usage of the clip 70 and the configuration of the curved surface 46a allow the application of a force from outside inwards, in particular at the sealing element 12a, which guarantees the correct pressure conditions between the sealing element 12a and the inner wall of the flexible hose 101, in order to allow the correct sealing, and secondly, to prevent the extraction of the connector 1, in working conditions.

It is to be observed that the elements cited in the present description contribute to the realization of the connector 1, which according to an embodiment can be made up of only one piece (realized also by welding the various above-mentioned elements).

The unique piece, in fact, guarantees the absence of errors due to a wrong mounting of the elements, reduces the risk of failure of the assembly, and allows the significant reduction of assembly times.

The elements of the connector 1 are preferably realized in metal material by means of turning or plastic deformation.

The clip 70 can be realized in metal, plastic, composite material or a combination thereof.

In use, the connector 1 allows a coupling between a flexible hose 101 and another flexible hose or a following portion of a refrigeration or conditioning plant.

Object of the present invention is also a method for realizing a connection between the connector 1 and at least a flexible hose 101 or a following portion of the plant.

The method comprises the step of preparing the connector 1, preparing at least one flexible hose 101, introducing the hollow main body 15 into the flexible hose 101 and putting the at least one clamping element 45 in contact to the outer surface of the flexible hose 101 to apply a force in radial direction on the outer surface of the flexible hose 101 so as to define a sealing connection between the clamping element 45 and the flexible hose 101.

The method, prior to the step of introducing the hollow main body 15 into the flexible hose 101, is provided with the step of preparing the connector 1, wherein the hollow main body 15 comprises an outer lateral surface having at least one ramp-like annular element 5a, adjacent to at least one circumferential annular cavity 6a.

In the following, it is provided the step of preparing at least one sealing element 12a and of introducing it in the annular cavity 6a of the hollow main body 15 of the connector 1.

According to another aspect, the method comprises the step of preparing a clip 70. In fact, the step of putting the at least one clamping element 45 in contact to the outer surface of the flexible hose 101 is realized by wrapping the clamping element 45 and the flexible hose 101 by means of the clip 70.

The clip 70 in positioned at the portion 45a of the clamping element 45 to guarantee an efficient sealing between the hollow main body 15 of the connector 1 and the flexible hose 101 introduced on the hollow main body 15.

Moreover, according to the method object of the present invention, the step of putting the at least one clamping element 45 in contact to the outer surface of the flexible hose 101 is realized by positioning the clip 70 in a portion 45a of the clamping element 45, arranged at the sealing element 12a.

The clip 70, when properly positioned, provides a radial compression on the flexible hose 101 and squeezes it against the sealing element 12a, thus guaranteeing a particularly efficient sealing.

Advantageously, the configuration (with curved surface) of each clamping element 45 of the connector 1 object of the present invention allows to realize an efficient coupling between the connector 1 and the flexible hose 101, preserving the contact area between the two of them and avoiding the extraction of the hose 101 and its relative rotation with respect to the connector 1, thus reducing the risk of fluid leaks.

Advantageously, the connector 1 object of the present invention can be used in plants in which the hoses are crossed by high pressure fluids, in the order of 45 bar o more.

Moreover, advantageously, the connector 1 object of the present invention allows to avoid the permeability to gases with very little molecules and/or inflammable gases.

Advantageously, the connector 1 and the method according to the present invention allow to overcome the above-mentioned limits of the known art and to achieve an efficient sealing connection between a connector and at least a flexible hose 101.

**Claims**

1. A connector (1) for flexible hoses, comprising:

   - a hollow main body (15), extending in a first axial direction (X) and defining an element for coupling with a flexible hose (101), the hollow main body (15) comprising an outer lateral surface having at least one annular ramp-like element (5a), adjacent to at least one circumferential annular cavity (6a) and defining a housing for a sealing element (12a);
   - at least one clamping element (45) extending in the first axial direction (X) and configured for applying, radially, a locking force on an outer surface of said flexible hose (101) when said flexible hose (101) is coupled to the hollow main body (15);
   said clamping element (45) having at least one portion (45a), in use, in contact with said flexible hose (101);
   - a connecting body (2) extending around the hollow main body (15) and to which at least said clamping element (45) is fixed;

   **the connector (1) being characterised in that** the at least one portion (45a) of the clamping element (45) comprises a curved surface (46a), in a radial direction.

2. A connector (1) according to claim 1, wherein each clamping element (45) is **characterised in that** it has a profile having at least one recess (45b).

3. A connector (1) according to claim 1 or 2, wherein the hollow main body (15) comprises a cylindrical portion, having a first diameter $D_{ext}$ and wherein the curved surface (46a) of the clamping element (45) has a diameter between the value $\dfrac{D_{ext}}{\pi^3}$ and $D_{ext} \cdot \pi^5$.

4. A connector (1) according to any one of the preceding claims, wherein said at least one clamping element (45) has in a proximal end (45e), relative to the connecting body (2), connecting means (3), and in a distal end (45f) to the connecting body (2) it has a protruding tab (45d).

5. A connector (1) according to any one of the preceding claims, wherein each clamping element (45) has at least one curved portion (45a), in use, at least partly in contact with the flexible hose (101).

6. A connector (1) according to any one of the preceding claims, wherein the sealing element (12a) housed in said annular cavity (6a) allows, in use, a sealed coupling between the flexible hose (101) and the hollow main body (15).

7. The connector (1) according to any one of the preceding claims, wherein the annular cavity (6a) is delimited by a pair of side walls (60, 61) having a curved profile and a bottom wall (62).

8. A connector (1) according to any one of the preceding claims, wherein there are two ramp-like annular elements (5a, 5b) separated by a distance equal to the length of the annular cavity (6a).

9. A connector (1) according to any one of the preceding claims, wherein the hollow main body (15) has a distal portion (20) having a tapered shape.

10. The connector (1) according to claim 9, wherein the hollow main body (15) has a proximal portion (21), opposite the distal portion (20), and integral with the connecting body (2).

11. A connector (1) according to any one of the preceding claims, comprising a clip (70) intended to wrap, in the above-mentioned portion (45a) of the clamping element (45) and at the sealing element (12a), said flexible hose (101).

12. A method for making a connection with at least one flexible hose (101), comprising the steps of:

   - preparing a connector (1) according to any one of the preceding claims;
- preparing at least one flexible hose (101);
- inserting the hollow main body (15) into the flexible hose (101);
- putting said at least one clamping element (45) in contact with an outer surface of said flexible hose (101) to apply a force in a radial direction on the outer surface of said flexible hose (101) in such a way as to define a sealed connection between the clamping element (45) and the flexible hose (101).

13. The method according to the preceding claim, comprising, before the step of inserting the hollow main body (15) inside the flexible hose (101), the steps of:

- preparing a connector (1) wherein the hollow main body (15) comprises an outer lateral surface having at least one ramp-like annular element (5a), adjacent to at least one circumferential annular cavity (6a);
- preparing at least one sealing element (12a);
- inserting the sealing element (12a) in the annular cavity (6a) of the hollow main body (15).

14. The method according to claim 12 or 13, comprising the step of preparing a clip (70); and wherein the step of placing said at least one clamping element (45) in contact with the outer surface of said flexible hose (101) is performed by wrapping said clamping element (45) and said flexible hose (101) using the clip (70).

15. The method according to any one of claims 12 to 14, wherein the step of placing said at least one clamping element (45) in contact with the outer surface of said flexible hose (101) is performed by positioning the clip (70) in a portion (45a) of the clamping element (45) at the sealing element (12a).

# Fig.1

# Fig.2

# Fig.3

# Fig.4

Europäisches
Patentamt

European
Patent Office

Office européen
des brevets

# EUROPEAN SEARCH REPORT

**Application Number**

**EP 25 19 3233**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/015247 A1 (SORBI MARCO [IT]) 16 January 2014 (2014-01-16) * paragraph [0001] - paragraph [0138]; figures 1-11 * ----- | 1-15 | INV. F16L33/22 |
| Y | DE 12 88 383 B (BAND IT COMPANY) 30 January 1969 (1969-01-30) * column 1, line 1 - column 5, line 31; figures 1-11 * ----- | 1-15 | |
| A | EP 1 129 315 B1 (EATON AEROQUIP INC) 20 July 2005 (2005-07-20) * paragraph [0016] - paragraph [0024]; figures 1-4, 9 * ----- | 1-15 | |
| A | US 8 091 928 B2 (CARRIER MICHAEL OWEN [US]; ELLERBROCK RYAN THOMAS [US] ET AL.) 10 January 2012 (2012-01-10) * column 3, line 29 - column 6, line 42; figures * ----- | 1-15 | |
| A | EP 1 131 578 B1 (CAILLAU ETS [FR]) 10 November 2004 (2004-11-10) * paragraph [0022] - paragraph [0051]; figures * ----- | 1-15 | TECHNICAL FIELDS SEARCHED (IPC) F16L |
| A | US 4 607 867 A (JANSEN GEORGE A [US]) 26 August 1986 (1986-08-26) * column 2, line 65 - column 4, line 21; figures 1-3 * ----- | 1-15 | |

The present search report has been drawn up for all claims

| Place of search | Date of completion of the search | Examiner |
|---|---|---|
| Munich | 28 November 2025 | Cross, Alexandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 3233

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2025

| Patent document cited in search report | | | Publication date | Patent family member(s) | | Publication date |
|---|---|---|---|---|---|---|
| US 2014015247 | A1 | | 16-01-2014 | DK 2691680 | T3 | 17-07-2017 |
| | | | | EP 2691680 | A1 | 05-02-2014 |
| | | | | ES 2630020 | T3 | 17-08-2017 |
| | | | | PL 2691680 | T3 | 31-10-2017 |
| | | | | US 2014015247 | A1 | 16-01-2014 |
| | | | | WO 2012131572 | A1 | 04-10-2012 |
| DE 1288383 | B | | 30-01-1969 | NONE | | |
| EP 1129315 | B1 | | 20-07-2005 | AT E300013 | T1 | 15-08-2005 |
| | | | | AU 753218 | B2 | 10-10-2002 |
| | | | | BR 9914173 | A | 07-05-2002 |
| | | | | CA 2344691 | A1 | 06-04-2000 |
| | | | | CN 1320201 | A | 31-10-2001 |
| | | | | CZ 20011079 | A3 | 13-03-2002 |
| | | | | DE 69926253 | T2 | 27-04-2006 |
| | | | | EP 1129315 | A1 | 05-09-2001 |
| | | | | ES 2245513 | T3 | 01-01-2006 |
| | | | | HK 1040759 | A1 | 21-06-2002 |
| | | | | IL 141422 | A | 18-12-2005 |
| | | | | JP 4374561 | B2 | 02-12-2009 |
| | | | | JP 2002525542 | A | 13-08-2002 |
| | | | | KR 20010075029 | A | 09-08-2001 |
| | | | | MX PA01003041 | A | 14-10-2003 |
| | | | | PT 1129315 | E | 30-09-2005 |
| | | | | US 6010162 | A | 04-01-2000 |
| | | | | WO 0019137 | A1 | 06-04-2000 |
| US 8091928 | B2 | | 10-01-2012 | CA 2753707 | A1 | 25-08-2010 |
| | | | | CN 102414499 | A | 11-04-2012 |
| | | | | US 2010215430 | A1 | 26-08-2010 |
| | | | | WO 2010099404 | A2 | 02-09-2010 |
| EP 1131578 | B1 | | 10-11-2004 | AU 1276200 | A | 05-06-2000 |
| | | | | DE 69921846 | T2 | 08-12-2005 |
| | | | | EP 1131578 | A1 | 12-09-2001 |
| | | | | ES 2233085 | T3 | 01-06-2005 |
| | | | | FR 2785966 | A1 | 19-05-2000 |
| | | | | WO 0029775 | A1 | 25-05-2000 |
| US 4607867 | A | | 26-08-1986 | NONE | | |

EPO FORM P0459

For more details about this annex : see Official Journal of the European Patent Office, No. 12/82